# EUROPÄISCHE PATENTSCHRIFT

(11) **EP 0 442 082 B1**
(45) Veröffentlichungstag und Bekanntmachung des Hinweises auf die Patenterteilung: **02.03.1994**
(21) Anmeldenummer: 90124006.9
(22) Anmeldetag: 13.12.1990
(51) Int. Cl.: F16H 61/26

(54) **Verbindungseinrichtung für des Schaltgestänge von Kraftfahrzeugen**
Connection device for a gearshift control linkage of motor vehicles
Dispositif de connexion pour une timonerie de changement de vitesse de véhicules automobiles

(30) Priorität: 10.02.1990 DE 4004104
(43) Veröffentlichungstag der Anmeldung: 21.08.1991
(73) Patentinhaber: DIEHL GMBH & CO., 90478 Nürnberg (DE)
(72) Erfinder: Engel, Michael, W-5541 Neuendorf (DE); Pepping, Karl-Heinz, W-5372 Schleiden (DE); Gebhardt, Günther, W-5536 Stadtkyll (DE)

(56) Entgegenhaltungen:
- DE-B- 1 103 772
- DE-C- 3 806 151
- GB-A- 2 181 517

## Beschreibung

Die Erfindung betrifft eine Verbindungseinrichtung zur Verbindung einer mit dem Getriebe eines Kraftfahrzeugs verbundenen Schaltstange mit einer mit dem Schalthebel des Kraftfahrzeugs verbundenen Schaltstange, wobei die beiden Schaltstangen mit ihren einander zugewandten Endabschnitten ineinandergreifen und zur verdrehfesten Verbindung einen von der Kreisform abweichenden Querschnitt aufweisen.

Eine derartige Verbindungseinrichtung ist bspw. in der DE-C-3 109 182 beschrieben. Dort sind die verdrehfest ineinandergreifenden Endabschnitte der beiden Schaltstangen von mehreren Hülsenelementen konzentrisch umgeben, wobei zwischen benachbarten Hülsenelementen Stiftverbindungen ausgebildet sind. Eine solche Verbindungseinrichtung ist durch die übereinander konzentrisch vorgesehenen Hülsen in ihrer Herstellung und insbes. in ihrem Zusammenbau aufwendig, was sich auf die Herstellungskosten der Verbindungseinrichtung auswirkt.

Eine ähnliche Verbindungseinrichtung ist bspw. in der EP-A-0 091 608 beschrieben. Auch diese bekannte Verbindungseinrichtung weist eine Vielzahl Einzelteile auf, so dass sich bei ihrer Herstellung ein nicht zu vernachlässigender Montageaufwand ergibt.

Die DE-A-3 806 522 beschreibt ein Kraftübertragungsgelenk mit einem Kreuzgelenkkäfig, einem darin fixierten Kulissenstein zur Aufnahme eines Gelenkzapfens und mit elastischen Elementen. Mit diesem bekannten Kraftübertragungsgelenk ist es möglich, das sog. äussere Schaltungssystem vom inneren Schaltungssystem derartig abzukoppeln, dass während des Schaltvorgangs am Schalthebel keine ruckartigen Kraftspitzen spürbar sind. Das wird dadurch erreicht, dass der Kreuzgelenkkäfig eine rechtwinkelige Ausnehmung aufweist, der Kulissenstein entsprechend der Ausnehmung quaderförmig ausgebildet und umfangsseitig bzw. seitlich durch ein Halteglied nur in der Schwenkebene um die Achse spielfrei gehalten ist, während in Längsrichtung bzw. in Schubrichtung für den Kulissenstein freie Wegstrecken für einen definierten Freigang und gummielastische Dämpfer vorgesehen sind. Durch den Kreuzgelenkkäfig mit rechtwinkeliger Ausnehmung weist dieses bekannte Kraftübertragungsgelenk einen nicht zu vernachlässigenden Platz- bzw. Raumbedarf auf. Ausserdem bedingt die Montage dieses Kraftübertragungsgelenkes bzw. dieser zur Verbindung einer mit dem Getriebe eines Kraftfahrzeugs verbundenen Schaltstange mit einer mit dem Schalthebel des Kraftfahrzeugs verbundenen Schaltstange vorgesehenen Verbindungseinrichtung einen Montageaufwand, der sich auf die Herstellungskosten der Verbindungseinrichtung auswirkt.

Der Erfindung liegt die Aufgabe zugrunde, eine Verbindungseinrichtung der eingangs genannten Art zu schaffen, die einfach aufgebaut und einfach herstellbar ist, die einen relativ kleinen Platzbedarf besitzt, und die während eines Schaltvorgangs zur Vermeidung störender Getriebekraftspitzen gute Dämpfungseigenschaften besitzt, wobei gleichzeitig gewährleistet ist, dass in Wählrichtung des Schalthebels Spielfreiheit gegeben ist.

Diese Aufgabe wird erfindungsgemäss dadurch gelöst, dass zwischen den ineinandergreifenden Endabschnitten der beiden Schaltstangen ein zur Körperschalldämpfung dienendes Zwischenelement vorgesehen ist, und dass an der einen Schaltstange ein Käfig und dass an der anderen Schaltstange ein vom Käfig umschlossener Zentralkörper befestigt ist, wobei der Käfig zwei einander zugewandte, mindestens annähernd radial orientierte Innenflächen und der Zentralkörper zwei voneinander abgewandte und den Innenflächen des Käfigs in einem Abstand gegenüberliegende, mindestens annähernd radial orientierte Stirnflächen aufweist, und an den beiden Stirnflächen des Zentralkörpers oder an den beiden Innenflächen des Käfigs zur Dämpfung von Getriebekraftspitzen Federelemente vorgesehen sind. Das zwischen den beiden Schaltstangen vorgesehene Zwischenelement dient der Dämpfung unerwünschten Körperschalls, der bei bekannten Verbindungseinrichtungen der gattungsgemässen Art in unerwünschter Weise von der Getriebeseite zur Seite des Schalthebels durch- und somit in die Fahrgastzelle eines Kraftfahrzeugs eingeleitet wird, wodurch der Fahrkomfort beeinträchtigt wird. Ausserdem weist das Zwischenelement den Vorteil auf, dass auch nach einer langen Einssatzdauer der Verbindungseinrichtung mit Hilfe des Zwischenelementes ein Verschleiss der ineinandergreifenden Endabschnitte der beiden Schaltstangen quasi ausgeschlossen ist. Das Zwischenelement besteht vorzugsweise aus einem abriebfesten Material mit kleinem Gleitreibungskoeffizienten und ist vorzugsweise am Endabschnitt der einen Schaltstange befestigt und demzufolge in Bezug auf den Endabschnitt der anderen Schaltstange innerhalb bestimmter kleiner Streckenabmessungen teleskopartig bewegbar. Diese Streckenabmessungen sind in Schaltrichtung des Schaltgestänges gegeben. In Wählrichtung des Schaltgestänges ist zwischen den Endabschnitten der Schaltstangen Spielfreiheit vorhanden, so dass ein präzises Wählgeführ gewährleistet wird. Der an einer Schaltstange bzw. ihrem Endabschnitt fixierte Zentralkörper und der den Zentralkörper umgebende, an der anderen Schaltstange befestigte Käfig sind einfach ausgebildet, so dass der Montageaufwand gering ist, und sie weisen nur einen geringen Patzbedarf auf, so dass die erfindungsgemässe Verbindungseinrichtung auch dort zum Einsatz gelangen kann, wo nur ein kleines Raumangebot vorhanden ist.

Zwischen den Federelementen und den Innenflächen des Käfigs - wenn die Federelemente am Zentralkörper vorgesehen sind-, bzw. zwischen den Federelementen und den Stirnflächen des Zentralkörpers -wenn die Federelemente am Käfig, d.h. an den Innenflächen des Käfigs, angeordnet sind-, ist in Schaltrichtung und somit in Längsrichtung des Gestänges bzw. der Verbindungseinrichtung ein kleines Spiel vorhanden, so dass die beiden Schaltstangen in axialer Richtung voneinander normalerweise abgekoppelt sind. Während eines Schaltvorgangs sind am Schalthebel in vorteilhafter Weise keine störenden ruckartigen Kraftspitzen, die bspw. durch Getriebesynchronisation gegeben sind, spürbar. Gleichzeitig wird -wie bereits ausgeführt worden ist- gewährleistet, dass in Wählrichtung des Schalthebels, d.h. während eines Wählvorgangs, bei welchem der Schalthebel von einer Schaltebene in eine andere Schaltebene geschwenkt wird, Spielfreiheit gegeben ist, so dass sich keine Beeinträchtigung des präzisen Wählgefühles ergibt. Während der Durchführung eines Wählvorgangs werden die erwähnten Federelemente auf Torsion beansprucht.

Die Federelemente bestehen vorzugsweise aus einem verschleissfesten Kunststoffmaterial.

Eine einfache Ausbildung der Verbindungseinrichtung ergibt sich, wenn zumindest der Endabschnitt der Getriebeschaltstange hülsenförmig mit einem von der Kreisform abweichenden Innenquerschnitt und der Endabschnitt der mit dem Schalthebel verbundenen Schaltstange einen von der Kreisform abweichenden Aussenquerschnitt aufweist, so dass zwischen den beiden ineinandergreifenden Endabschnitten der Schaltstangen ein von der Kreisform abweichender Spaltraum vorhanden ist, in welchem das die Körperschalldämpfung bewirkende Zwischenelement angeordnet ist. Aus Gründen einer gewünschten Gewichtsreduktion kann selbstverständlich nicht nur der Endabschnitt der Getriebeschaltstange hülsenförmig ausgebildet sein, sondern die gesamte Getriebeschaltstange. Aus demselben Grunde ist vorzugsweise auch die mit dem Schalthebel verbundene Schaltstange als Hülse ausgebildet. Ausser der Gewichtsreduktion wird auf diese Weise auch die mechanische Stabilität bezüglich Durchbiegung und Torsionsfestigkeit verbessert.

Vorzugsweise umgibt der Endabschnitt der Getriebeschaltstange den Endabschnitt der mit dem Schalthebel verbundenen Schaltstange, und weisen die Endabschnitte der beiden Schaltstangen und das Zwischenstück konforme, von der Kreisform abweichende Ringquerschnitte auf.

Der Zentralkörper kann als Ringflansch ausgebildet sein, der an dem der Schaltstange zugewandten Ende der Getriebeschaltstange radial nach aussen wegsteht. Eine einfache Ausbildung der Verbindungseinrichtung ergibt sich, wenn bei der zuletzt erwähnten Konstruktion der Ringflansch an seinen beiden voneinander abgewandten Stirnflächen mit den Federelementen versehen ist, und wenn zwischen den Federelementen und den gegenüberliegenden Innenflächen des Käfigs in Schaltrichtung der Verbindungseinrichtung der bereits weiter oben erwähnte Spielabstand vorhanden ist, durch welchen getriebebedingte Einschnapp-Vorgänge in vorteilhafter Weise so weit abgeschwächt werden, dass diese störenden Vorgänge bzw. Effekte am Schalthebel bzw. dessen Betätigungsknopf nicht mehr spürbar sind. Mit Hilfe der Federelemente werden ausserdem -wie bereits erwähnt worden ist- die bspw. durch Synchronisation entstehenden Getriebekraftspitzen bis zu nicht mehr feststellbaren Werten abgedämpft, was für beide Schaltrichtungen z.B. einer H-Schaltung gilt.

Um in der erfindungsgemässen Verbindungseinrichtung jederzeit symmetrische Kräfteverhältnisse zu gewährleisten, die zur Realisierung eines präzisen Wählgefühles erforderlich sind, hat es sich als zweckmässig erwiesen, wenn die Federelemente auf jeder Stirnfläche des Ringflansches entlang eines Kreises um die Längsachse der Verbindungseinrichtung bzw. Schaltrichtung des Schaltgestänges symmetrisch angeordnet sind. Besonders vorteilhaft ist es, wenn die Federelemente hierbei als entlang eines entsprechenden Kreises voneinander beabstandete Noppen ausgebildet sind. Die Federelemente können hierbei in vorteilhafter Weise progressive Federungseigenschaften aufweisen. Hierdurch werden im Getriebe entstehende Kraftspitzen, die bspw. durch das Einrasten von Getriebeelementen erzeugt werden, sehr wirkungsvoll beseitigt. Insgesamt ergibt sich somit eine Verbindungseinrichtung, mit welcher die an sie gestellten Forderungen auf ebenso einfache wie wirkungsvolle Weise gelöst werden.

Weitere Einzelheiten ergeben sich aus der nachfolgenden Beschreibung eines in der Zeichnung dargestellten Ausführungsbeispieles der erfindungsgemässen Verbindungseinrichtung. Es zeigt:
- Fig. 1: einen Längsschnitt durch die Verbindungseinrichtung und durch die miteinander verdrehfest verbundenen Endabschnitte des Schaltgestänges,
- Fig. 2: einen Schnitt entlang der Schnittlinie II-II in Fig. 1, und
- Fig. 3: einen Schnitt entlang der Schnittlinie III-III in Fig.1.

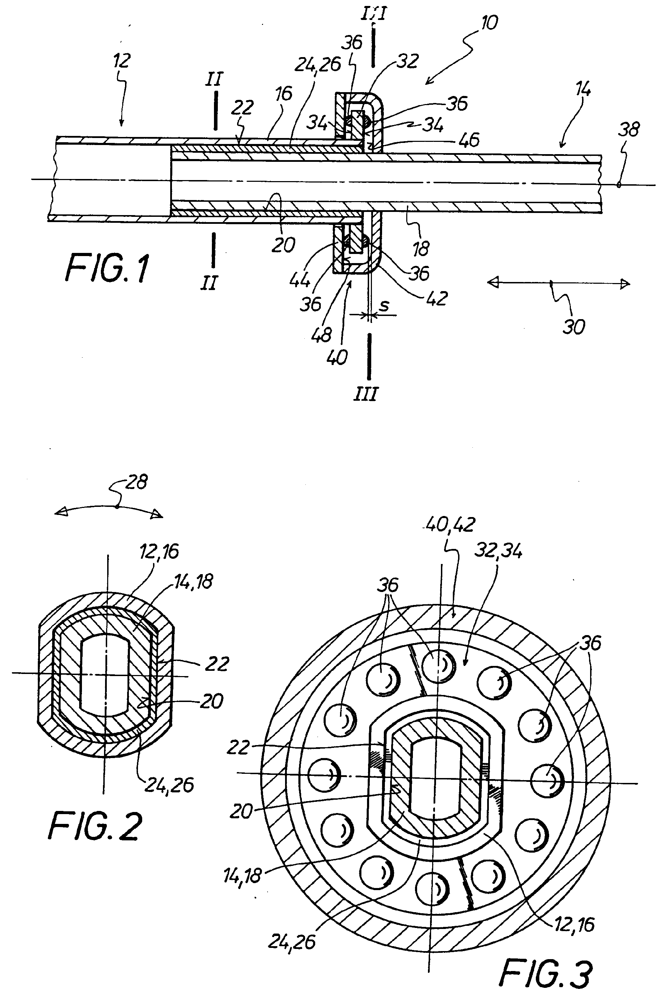

Fig. 1 zeigt eine Verbindungseinrichtung 10 zur Verbindung einer mit einem (nicht gezeichneten) Getriebe verbundenen Schaltstange 12 mit einer mit einem (nicht dargestellten) Schalthebel verbundenen Schaltstange 14, wobei in dieser Figur die ineinandergreifenden und gegeneinander verdrehfest vorgesehenen Endabschnitte 16, 18 der Getriebeschaltstange 12 bzw. der mit dem Schalthebel verbundenen Schaltstange 14 gezeichnet sind. Aus Fig.2 ist deutlich ersichtlich, dass die Getriebeschaltstange 12 bzw. mindestens ihr Endabschnitt 16 hülsenförmig mit einem von der Kreisform abweichenden Querschnittsprofil ausgebildet ist. Der Endabschnitt 18 der mit dem Schalthebel verbundenen Schaltstange 14 ist mit einem Querschnittsprofil ausgebildet, das -wie aus Fig.2 ersichtlich ist- zum Querschnittsprofil des Endabschnittes 16 konform ausgebildet ist. Der Endabschnitt 18 der Schaltstange 14 weist eine Aussenfläche 20 auf, deren Umfangsabmessungen kleiner sind als die Umfangsabmessungen der Innenfläche 22 des Endabschnittes 16 der Getriebeschaltstange 12, so dass zwischen der Aussenfläche 20 und der Innenfläche 22 ein in Umfangsrichtung des Schaltgestänges umlaufender Spaltraum 24 gegeben ist, in welchem ein Zwischenelement 26 vorgesehen ist. Das Zwischenelement 26 ist mit dem in den Endabschnitt 16 der Getriebeschaltstange 12 hineinragenden Endabschnitt 18 der Schaltstange 14 fest verbunden und in Bezug auf den Endabschnitt 16 der Getriebeschaltstange 12 teleskopartig beweglich. Durch die von der Kreisform abweichende Querschnittsform der ineinandergreifenden Endabschnitte 16 und 18 der Schaltstangen 12 und 14 und das Zwischenelement 26 ergibt sich in der durch den Doppelpfeil 28 (sh. Fig. 2) angedeuteten Wählrichtung zwischen den beiden Schaltstangen 12 und 14 eine spielfreie verdrehfeste Verbindung. Demgegenüber ist zwischen den beiden Schaltstangen 12 und 14 in der in Fig. 1 durch den Doppelpfeil 30 angedeuteten Schaltrichtung eine begrenzte axiale Beweglichkeit gegeben, wobei das Zwischenelement 26 zur abriebfesten Gleitführung dient und eine Körperschalldämpfung bewirkt.

An dem der Schaltstange 14 zugewandten Ende der Getriebeschaltstange 12 ist ein Zentralkörper 32 befestigt, der -wie aus Fig. 3 deutlich ersichtlich ist- als Ringflansch ausgebildet ist. Der Zentralkörper 32 weist zwei voneinander abgewandte Stirnflächen 34 auf, an denen Federelemente 36 befestigt sind. Aus Fig. 3 ist ersichtlich, dass die Federelemente 36 entlang eines zur Längsachse 38 der Verbindungseinrichtung 10 konzentrischen Kreises als voneinander äquidistant beabstandete Noppen ausgebildet sind. Die Federelemente 36 bestehen bspw. aus einem Elastomer-Material.

Am Endabschnitt 18 der mit dem Schalthebel verbundenen Schaltstange 14 ist ein Käfig 40 befestigt, der mit einem Tellerelement 42 vom Endabschnitt 18 der Schaltstange 14 radial wegsteht. Das Tellerelement 42 ist durch ein Ringelement 44 des Käfigs 40 verschlossen. Der Käfig 40 weist zwei einander zugewandte Innenflächen 46 und 48 auf, wobei die Verbindungseinrichtung 10 in Fig. 1 in einer Stellung gezeichnet ist, in welcher die auf der Getriebeseite vorgesehenen Federelemente 36 an der Innenfläche 48 des Käfigs 40 anliegen, während die dem Schalthebel zugewandten Federelemente 36 von der zu ihnen benachbarten Innenfläche 46 des Käfigs 40 einen kleinen Spielabstand besitzen, der mit s bezeichnet ist. Durch diesen Spielabstand bzw. Freigang werden die durch das Einrasten von Getriebeelementen bedingten Einschnapp-Effekte des Getriebes so weit abgeschwächt, dass diese Effekte am Schalthebel nicht mehr spürbar sind. Ein weiterer Vorteil der Verbindungseinrichtung 10 besteht darin, dass sich infolge ihrer Ausbildung keine Beeinträchtigung eines gewünschten präzisen Wählgefühles ergibt.

In den Figuren 1 bis 3 sind gleiche Einzelheiten jeweils mit denselben Bezugsziffern bezeichnet, so dass es sich erübrigt, in Verbindung mit Fig. 3 alle aus Fig. 1 ersichtlichen Einzelteile noch einmal detailliert zu beschreiben.

In Fig. 3 sind noppenförmige Federelemente 36 gezeichnet, selbstverständlich wäre es unter Umständen auch möglich, ein Federelement 36 an der entsprechenden Stirnfläche 34 in sich geschlossen kreisringförmig vorzusehen. Desgleichen wäre es denkbar, Federelemente in zueinander konzentrischen Kreisringen bzw. als Noppen entlang konzentrischer Kreislinien vorzusehen. Bei der Ausbildung der Federelemente 36 als Noppen ergibt sich der Vorteil, dass die Flächenpressung zwischen den Federelementen 36 und der entsprechenden Innenfläche 46 des Käfigs 40 verbessert ist, so dass sich in vorteilhafter Weise ein progressives Federungsverhalten zwischen den beiden Schaltstangen 12 und 14 ergibt.

## Patentansprüche

1. Verbindungseinrichtung zur Verbindung einer mit dem Getriebe eines Kraftfahrzeugs verbundenen Schaltstange (12) mit einer mit dem Schalthebel des Kraftfahrzeugs verbundenen Schaltstange (14), wobei die beiden Schaltstangen (12, 14) mit ihren einander zugewandten Endabschnitten (16, 18) ineinandergreifen und zur verdrehfesten Verbindung einen von der Kreisform abweichenden Querschnitt aufweisen,
**dadurch gekennzeichnet**,
dass zwischen den ineinandergreifenden Endabschnitten (16, 18) der beiden Schaltstangen (12, 14) ein zur Körperschalldämpfung dienendes Zwischenelement (26) vorgesehen ist, und dass an der einen Schaltstange (14) ein Käfig (40) und dass an der anderen Schaltstange (12) ein vom Käfig (40) umschlossener Zentralkörper (32) befestigt ist, wobei der Käfig (40) zwei einander zugewandte, mindestens annähernd radial orientierte Innenflächen (46, 48) und der Zentralkörper (32) zwei voneinander abgewandte und den Innenflächen (46, 48) des Käfigs (40) in einem Abstand gegenüberliegende, mindestens annähernd radial orientierte Stirnflächen (34) aufweist, und an den beiden Stirnflächen (34) des Zentralkörpers (32) oder an den beiden Innenflächen (46, 48) des Käfigs (40) zur Dämpfung von Getriebekraftspitzen Federelemente (36) vorgesehen sind.

2. Verbindungseinrichtung nach Anspruch 1,
**dadurch gekennzeichnet**,
dass zumindest der Endabschnitt (16) der Getriebeschaltstange (12) hülsenförmig mit einem von der Kreisform abweichenden Innenquerschnitt und der Endabschnitt (18) der mit dem Schalthebel verbundenen Schaltstange (14) einen von der Kreisform abweichenden Aussenquerschnitt aufweist, so dass zwischen den beiden ineinandergreifenden Endabschnitten (16, 18) der Schaltstangen (12, 14) ein von der Kreisform abweichender Spaltraum (24) vorhanden ist, in welchem das die Körperschalldämpfung bewirkende Zwischenelement (26) angeordnet ist.

3. Verbindungseinrichtung nach Anspruch 1 oder 2,
**dadurch gekennzeichnet,**
dass der Endabschnitt (16) der Getriebeschaltstange (12) den Endabschnitt (18) der mit dem Schalthebel verbundenen Schaltstange (14) umgibt, und dass die Endabschnitte (16, 18) der beiden Schaltstangen (12, 14) und das Zwischenelement (26) konforme, von der Kreisform abweichende Ringquerschnitte aufweisen.

4. Verbindungseinrichtung nach einem der vorhergehenden Ansprüche,
**dadurch gekennzeichnet**,
dass der Zentralkörper (32) als Ringflansch ausgebildet ist, der an dem der Schaltstange (14) zugewandten Ende der Getriebeschaltstange (12) radial nach aussen wegsteht.

5. Verbindungseinrichtung nach Anspruch 4,
**dadurch gekennzeichnet,**
dass der Ringflansch an seinen beiden voneinander abgewandten Stirnflächen (34) mit den Federelementen (36) versehen ist, und dass zwischen den Federelementen (36) und den gegenüberliegenden Innenflächen (46, 48) des Käfigs (40) in Schaltrichtung der Verbindungseinrichtung ein Spielabstand (s) vorhanden ist.

6. Verbindungseinrichtung nach Anspruch 4 oder 5,
**dadurch gekennzeichnet**,
dass die Federelemente (36) auf jeder Stirnfläche (46, 48) des Ringflansches (32) entlang eines Kreises um die Längsachse (38) der Verbindungseinrichtung bzw. Schaltrichtung des Schaltgestänges (12, 14) symmetrisch angeordnet sind.

7. Verbindungseinrichtung nach einem der Ansprüche 4 bis 6,
**dadurch gekennzeichnet**,
dass die Federelemente (36) als entlang eines entsprechenden Kreises voneinander beabstandete Noppen ausgebildet sind.

8. Verbindungseinrichtung nach einem der Ansprüche 4 bis 7,
**dadurch gekennzeichnet**,
dass die Federelemente (36) progressive Federungseigenschaften aufweisen.

## Claims

1. A connecting arrangement for connecting a shift rod (12), connected to the gear of a motor vehicle, to a shift rod (14) connected to the shift lever of the motor vehicle, in which respect the two shift roads (12, 14) interengage with their mutually facing end portions (16, 18) and for the torsionally-fast connection have a cross-section which deviates from a circular shape, characterised in that an intermediate element (26) which serves to damp structure-borne noise is provided between the interengaging end portions (16, 18) of the two shift rods (12, 14), and in that a cage (40) is fastened to the one shift rod (14) and in that a central body (32) enclosed by the cage (40) is fastened to the other shift rod (12), in which respect the cage (40) has two mutually facing inner surfaces (46, 48) which are directed at least approximately radially and the central body (32) has two mutually averted end surfaces (34) which lie at a spacing opposite to the inner surfaces (46, 48) of the cage (40) and which are orientated at least approximately radially, and spring elements (36) are provided on the two end surfaces (34) of the central body (32) or on the two inner surfaces (46, 48) of the cage (40) to damp gear force peaks.

2. A connecting arrangement according to claim 1, characterised in that at least the end portion (16) of the gear shift rod (12) is sleeve-shaped with an inner cross-section deviating from a circular shape and the end portion (18) of the shift road (14) connected to the shift lever has an outer cross-section deviating from a circular shape, so that between the two interengaging end portions (16, 18) of the shift rods (12, 14) a gap space (24) deviating from a circular shape is present, in which the intermediate element (26) which brings about the damping of structure-borne noise is arranged.

3. A connecting arrangement according to claim 1 or 2, characterised in that the end portion (16) of the gear shift rod (12) surrounds the end portion (18) of the shift rod (14) connected to the shift lever, and in that the end portions (16, 18) of the two shift rods (12, 14) and the intermediate element (26) have conformal transverse sections which deviate from a circular shape.

4. A connecting arrangement according to any one of the preceding claims, characterised in that the central body (32) is designed as a ring flange which projects radially outwards at that end of the gear shift rod (12) which faces the shift rod (14).

5. A connecting arrangement according to claim 1, characterised in that the ring flange is provided with the spring elements (36) on its two mutually averted end surfaces (34), and in that between the spring elements (36) and the oppositely lying inner surfaces (46, 48) of the cage (40) in the shifting direction of the connecting arrangement a clearance gap(s) is present.

6. A connecting arrangement according to claim 4 or 5, characterised in that the spring elements (36) are arranged symmetrically on each end surface (46, 38) of the ring flange (32) along a circle around the longitudinal axis (38) of the connecting arrangement or respectively shifting direction of the shift linkage (12, 14).

7. A connecting arrangement according to any one of claims 4 to 6, characterised in that the spring elements (36) are designed as knobs spaced apart from one another along a corresponding circle.

8. A connecting arrangement according to any one of claims 4 to 7, characterised in that the spring elements (36) have progressive spring properties.

## Revendications

1. Dispositif de liaison destiné à relier une tringle (12) de changement de vitesse, reliée à la boîte de vitesses d'un véhicule automobile, avec une tringle (14) de changement de vitesse, reliée au levier de changement de vitesse du véhicule automobile, les deux tringles (12, 14) s'emboîtant l'une dans l'autre avec leurs parties d'extrémité (16, 18) tournées l'une vers l'autre et présentant une section transversale non circulaire, pour la liaison solidaire en rotation, caractérisé en ce qu'entre les parties d'extrémité (16, 18), s'emboîtant l'une dans l'autre, des deux tringles (12, 14), il est prévu un élément intermédiaire (26), servant à amortir les bruits de structure, et en ce que sur une tringle (14) est fixée une cage (40) et sur l'autre tringle (12) un corps central (32), entouré par la cage (40), la cage (40) présentant deux surfaces intérieures (46, 48) tournées l'une vers l'autre, orientées au moins à peu près radialement et le corps central (32) présentant deux surfaces frontales (34) tournées à l'opposé l'une de l'autre et faisant face aux surfaces intérieures (46, 48) de la cage (40), à une certaine distance de celles-ci, orientées au moins à peu près radialement, et sur les deux surfaces frontales (34) du corps central (32) ou sur les deux surfaces intérieures (46, 48) de la cage (40), des éléments à ressort (36) étant prévus pour amortir les pointes de force de la boîte de vitesses.

2. Dispositif de liaison selon la revendication 1, caractérisé en ce qu'au moins la partie d'extrémité (16) de la tringle (12) de changement de vitesse en forme de manchon avec une section transversale intérieure non circulaire et la partie d'extrémité (18) de la tringle (14) reliée au levier de changement de vitesse, présentent une section transversale extérieure non circulaire, de sorte qu'entre les deux parties d'extrémité (16, 18) s'emboîtant l'une dans l'autre, des tringles (12, 14), il se forme une fente (24) de forme non circulaire dans laquelle est placé l'élément intermédiaire (26), assurant l'amortissement des bruits de structure.

3. Dispositif de liaison selon les revendications 1 ou 2, caractérisé en ce que la partie d'extrémité (16) de la tringle (12) de changement de vitesse entoure la partie d'extrémité (18) de la tringle (14) reliée au levier de changement de vitesse et en ce que les parties d'extrémité (16, 18) des deux tringles (12, 14) et l'élément intermédiaire (26) présentent des sections transversales annulaires conformes, non circulaires.

4. Dispositif de liaison selon l'une des revendications précédentes, caractérisé en ce que le corps central (32) est une bride annulaire qui fait saillie radialement vers l'extérieur à l'extrémité, tournée vers la tringle (14), de la tringle (12) de changement de vitesse.

5. Dispositif de liaison selon la revendication 4, caractérisé en ce que la bride annulaire est pourvue des éléments à ressort (36) sur ses deux surfaces frontales (34) tournées à l'opposé l'une de l'autre et en ce qu'entre les éléments à ressort (36) et les surfaces intérieures (46, 48) opposées de la cage (40), il est prévu un jeu (s) dans le sens de la manoeuvre du dispositif de liaison.

6. Dispositif de liaison selon les revendications 4 ou 5, caractérisé en ce que les éléments à ressort (36) sont disposés symétriquement sur chaque surface frontale (46, 48) de la bride annulaire (32), le long d'un cercle, autour de l'axe longitudinal (38) du dispositif de liaison ou sens de manoeuvre de la tringle (12, 14).

7. Dispositif de liaison selon l'une des revendications 4 à 6, caractérisé en ce que les éléments à ressort (36) sont des boutons espacés l'un de l'autre, le long d'un cercle correspondant.

8. Dispositif de liaison selon l'une des revendications 4 à 7, caractérisé en ce que les éléments à ressort (36) présentent des caractéristiques de ressort progressives.
